# EUROPÄISCHE PATENTSCHRIFT

(11) **EP 4 405 220 B1**
(45) Veröffentlichungstag und Bekanntmachung des Hinweises auf die Patenterteilung: **29.10.2025**
(21) Anmeldenummer: 22773222.9
(22) Anmeldetag: 05.09.2022
(51) Int. Cl.: B60T 10/02, F16D 57/00, F16D 65/14, G05D 16/20

(54) **PNEUMATISCHE STEUERVORRICHTUNG FÜR EINE HYDRODYNAMISCHE BREMSE**
PNEUMATIC CONTROLLER FOR A HYDRODYNAMIC BRAKE
DISPOSITIF DE COMMANDE PNEUMATIQUE POUR UN FREIN HYDRODYNAMIQUE

(30) Priorität: 24.09.2021 DE 102021124745; 23.02.2022 DE 102022104290
(43) Veröffentlichungstag der Anmeldung: 31.07.2024
(73) Patentinhaber: ETO MAGNETIC GmbH, 78333 Stockach (DE)
(72) Erfinder: THODE, Oliver, 78333 Stockach (DE); BÜRSSNER, Jörg, 78234 Engen (DE); LAVAL, Anthony, 78315 Radolfzell (DE); SOHNEMANN, Peter, 78315 Radolfzell (DE)
(74) Vertreter: Daub, Thomas
(86) Internationale Anmeldenummer: PCT/EP2022/074627
(87) Internationale Veröffentlichungsnummer: WO 2023/046451

(56) Entgegenhaltungen:
- EP-A2- 1 970 788
- DE-A1- 102017 009 225
- DE-A1- 102019 134 843
- DE-A1- 19 929 152
- DE-B3- 102005 050 480
- DE-B3- 102011 106 522
- US-A- 5 333 707

## Beschreibung

Die vorliegende Erfindung betrifft eine pneumatische Steuervorrichtung für eine hydrodynamische Bremse nach dem Oberbegriff des Anspruchs 1. Des Weiteren betrifft die vorliegende Erfindung eine hydrodynamische Bremse mit einer derartigen pneumatischen Steuervorrichtung.

Gattungsgemäße pneumatische Steuervorrichtungen, wie sie z.B. aus den Druckschriften DE 10 2019 134 843 A1 und DE 199 29 152 A1 bekannt sind, werden häufig bei sogenannten Retardern eingesetzt, die als hydrodynamische oder elektromagnetische Retarder ausgeführt sein können. Derartige Retarder können beispielsweise bei Omnibussen und Lastkraftwagen ab einem gewissen Gesamtgewicht als eine Dauerbremsanlage zum Einsatz kommen, um die Bremssicherheit bzw. ein Bereitstellen einer Bremsleistung während der Fahrt mit einem solchen Fahrzeug stets zu gewährleisten. Hierbei kommen derartige Retarder neben einer Betriebsbremsanlage zum Einsatz, um beispielsweise auch bei einer Bergabfahrt, über einen längeren Zeitraum ein weitgehend verschleißfreies Abbremsen des Fahrzeuges mittels des Retarders zu ermöglichen.

Hydrodynamische Retarder werden zur Festlegung einer Höhe eines zu erzeugenden Bremsmomentes zumeist mittels einer pneumatischen Steuerung gesteuert. Derartige Steuervorrichtungen sind aus dem Stand der Technik bekannt. Durch derartige Steuerungen wird abhängig von der Bremsanforderung eines Fahrzeuges eine Bremsleistung durch eine Beaufschlagung eines mit einem Arbeitsfluid des Retarders gefüllten Vorratsbehälters mit Druckluft gesteuert bzw. geregelt.

Um bei einem Einschalten und/oder Ausschalten des Retarders sowie bei einer Änderung des von dem Fahrer angeforderten Bremsmomentes das entsprechende Bremsmoment möglichst schnell zur Verfügung zu stellen, ist eine schnelle Belüftung und Entlüftung des pneumatischen Steuerkreislaufes des Retarders, insbesondere eines Vorratsbehälters, welcher mit dem Arbeitsfluid gefüllt ist, erforderlich. Besonders wichtig ist die schnelle Entlüftung des Vorratsbehälters, um derart das Bremsmoment des Retarders situationsbedingt möglichst schnell abzuschalten. Zur Bereitstellung einer schnellen Belüftung und Entlüftung weisen bekannte pneumatische Steuerungen beispielsweise ein oder mehrere Einlassventile und ein oder mehrere Auslassventile auf, die jeweils einen möglichst großen Öffnungsquerschnitt sowie kurze Schaltzeiten umfassen.

Beispielsweise ist in der Druckschrift EP 3 819 175 A1 eine pneumatische Steuerung beschrieben, bei der mehrere Einlassventile und mehrere Auslassventile in einer jeweiligen Parallelschaltung betrieben werden können. Die jeweiligen Ventile können auch vorgesteuert sein. Durch die Parallelschaltung kann der wirksame Öffnungsquerschnitt der Einlassventile als auch der Auslassventile jeweils erhöht werden, so dass eine schnellere Belüftung und Entlüftung ermöglicht ist. Allerdings weist diese Steuerung weiterhin Nachteile hinsichtlich einer Betriebssicherheit auf.

In der Druckschrift EP 1 970 789 A2 ist als ein Lösungsansatz beispielsweise eine Steuervorrichtung beschrieben, die eine Vorsteuerstufe mit einem Einlassventil und einem Auslassventil und eine Hauptsteuerstufe mit zwei Einlassventilen und einem Auslassventil umfasst. Durch eine physische Engstelle in einem Steuerkanal ist eine fixe Drosselstelle geschaffen, die zumindest passiv Regelung eines Druckes zur Belüftung und Entlüftung durch die Vorsteuerstufe ermöglicht. Die bereitgestellte Regelung ermöglicht eine Art Schnellablassfunktion über das Ablassventil der Hauptsteuerstufe, so dass eine Entlüftungszeit verkürzt ist. Allerdings erfolgt die Ansteuerung des Ventils, welches die Schnellablass-Funktion bereitstellt, über die Vorsteuerstufe. Die Vorsteuerstufe ist mit 2/2-Wege-Ventilen ausgeführt, die einer gewissen Ausfallwahrscheinlichkeit unterliegen. Somit ist bei einem Ausfall der Vorsteuerstufe ggf. keine Schnellablass-Funktion verfügbar, wodurch eine sichere Funktionsweise der Regelung nicht umfassend gewährleistet ist.

Ausgehend vom vorangehend genannten Stand der Technik liegt der vorliegenden Erfindung daher eine Aufgabe zugrunde, zumindest die Entlüftung einer pneumatischen Regelvorrichtung derart weiterzuentwickeln, dass diese eine (ausfall-) sichere Funktionsweise aufweist und/oder möglichst fein steuerbar ist und/oder eine möglichst kurze Entlüftungszeit ermöglicht.

Zur Lösung dieser Aufgabe ist eine erfindungsgemäße pneumatische Steuervorrichtung für eine hydrodynamische Bremse vorgeschlagen. Die pneumatische Steuervorrichtung umfasst einen Arbeitsdruckanschluss, mindestens ein Einlassventil, über das eine zu dem Arbeitsdruckanschluss führende Arbeitsdruckleitung mit einer an eine Druckluftquelle angeschlossenen Belüftungsleitung verbindbar ist, und mindestens ein Auslassventil, über das die Arbeitsdruckleitung mit einer an einen Entlüftungsausgang angeschlossenen Entlüftungsleitung verbunden ist. Die Arbeitsdruckleitung ist über zumindest ein Schnellentlüftungsventil mit der Entlüftungsleitung verbunden. Die erfindungsgemäße pneumatische Steuervorrichtung ist dadurch gekennzeichnet, dass zwischen der Druckluftquelle und dem Schnellentlüftungsventil ein Sicherheitsventil angeordnet und dazu eingerichtet ist, das Schnellentlüftungsventil anzusteuern.

Ferner wird zur Lösung der oben genannten Aufgabe eine hydrodynamische Bremse mit einer erfindungsgemäßen, pneumatischen Steuervorrichtung vorgeschlagen.

Durch die erfindungsgemäße Steuervorrichtung ist beispielsweise ein besonders schnelles Abschalten einer an den Arbeitsdruckanschluss angeschlossenen hydrodynamischen Bremse, wie zum Beispiel einem Retarder, ermöglicht. Es wird nämlich ein schnelles Entlüften eines Arbeitsdruckes, der innerhalb der Arbeitsdruckleitung(en) vorherrscht, und mithin auch des Arbeitsdruckanschlusses, mittels des zumindest einen Schnellentlüftungsventils ermöglicht. Über das Schnellentlüftungsventil ist die Arbeitsdruckleitung, vorzugsweise unmittelbar, mit der zu dem Entlüftungsausgang führenden Entlüftungsleitung verbunden. Grundsätzlich kann die Steuervorrichtung auch mehrere Schnellentlüftungsventile aufweisen, die bspw. parallel zueinander geschaltet sein können und jeweils über ein Sicherheitsventil oder aber auch über ein gemeinsames Sicherheitsventil ansteuerbar sein können.

Das Sicherheitsventil ist vorzugsweise derart zwischen der Druckquelle und dem Schnellentlüftungsventil angeordnet, dass eine pneumatische Vorsteuerung des Schnellentlüftungsventils mittels des Sicherheitsventils ermöglicht ist. Das Sicherheitsventil ist vorzugsweise, beispielsweise in der Art eines Magnetschaltventils oder auf sonstige Weise aktivierbar, ausgeführt. Das Sicherheitsventil ist vorzugsweise zumindest zwischen einer aktiven Stellung und einer inaktiven Stellung schaltbar und somit dazu eingerichtet, das Schnellentlüftungsventil vorzusteuern. Mit anderen Worten wird gemäß einer bevorzugten Ausführungsform das Schnellentlüftungsventil pneumatisch mittels des Sicherheitsventils vorgesteuert. Ferner kann das Sicherheitsventil vorzugsweise in zumindest eine Zwischenstellung schaltbar sein.

In der inaktiven Stellung des Sicherheitsventils ist vorzugsweise zumindest ein Ausgang des Sicherheitsventils (insbesondere unmittelbar) mit der Entlüftungsleitung verbunden, so dass das Sicherheitsventil dazu eingerichtet ist, einen Vorsteuerkanal, der zu dem Schnellentlüftungsventil führt, möglichst vollständig zu entlüften. Der Vorsteuerkanal mündet in dieser inaktiven Stellung in einen Eingang des Sicherheitsventils. **In** der inaktiven Stellung des Sicherheitsventils ist ein Steuereingang an dem Schnellentlüftungsventil, welches durch das Sicherheitsventil pneumatisch (vor-) steuerbar ist, vorzugsweise vollständig druckfrei, so dass sich das Schnellentlüftungsventil in einer möglichst vollständigen Durchlassstellung befindet, in der die Arbeitsdruckleitung über das Schnellentlüftungsventil mit der Entlüftungsleitung verbunden ist. Das Schnellentlüftungsventil befindet sich in der inaktiven Stellung des Sicherheitsventils vorzugsweise ebenfalls in einer inaktiven, d. h., druckfreien Stellung. Eine vollständige Schnellentlüftung des Arbeitsdruckanschlusses ist in der inaktiven Stellung des Schnellentlüftungsventils möglich.

In der aktiven Stellung des Sicherheitsventils ist vorzugsweise ein Strömungsweg zwischen einem druckquellenseitigen Eingang des Sicherheitsventils und einem vorsteuerkanalseitigen Ausgang des Sicherheitsventils freigegeben. Das Sicherheitsventil ist somit dazu eingerichtet, mittels der Druckquelle, eine Vorsteuerdruck in dem Vorsteuerkanal und somit auch an dem Steuereingang des Schnellentlüftungsventils aufzubauen. Durch den Vorsteuerdruck wird das Schnellentlüftungsventil in eine aktive Stellung geschaltet. In der aktiven Stellung des Schnellentlüftungsventils wird eine Entlüftung der Arbeitsdruckleitung verhindert. Das Schnellentlüftungsventil befindet sich also in einer Sperrstellung, in der zumindest ein Ventileingang sowie ein Ventilausgang gesperrt sind. In der aktiven Stellung des Schnellentlüftungsventils ist daher ein Druckaufbau in der Arbeitsdruckleitung und somit auf an dem Arbeitsdruckanschluss möglich.

In einer bevorzugten Ausführungsform ist das Sicherheitsventil als ein 3/2-Wegeventil, insbesondere als ein 3/2-Wege-Magnetschaltventil, ausgeführt. Diese Ausführung des Sicherheitsventils ist zur Vorsteuerung des Schnellentlüftungsventils besonders bevorzugt. Grundsätzlich sind jedoch auch noch weitere hier nicht genannte Ventilausführungen denkbar. Insbesondere gegenüber einer Vorsteuerung einer Schnellentlüftung mittels einer Vorsteuerstufe, die 2/2-Wege-Ventile aufweist, wie sie in der EP 1 970 789 A2 offenbart ist, weist die erfindungsgemäße Vorsteuerung des Schnellentlüftungsventils sicherheitstechnische Vorteile auf. Insbesondere ist die Ausfallwahrscheinlichkeit der Schnellentlüftungsfunktion verringert, da in der inaktiven Stellung des Sicherheitsventils ein vollständiger Druckablass gewährleistet ist. Auch ist die Vorsteuerung gegenüber einer Vorsteuerstufe weniger komplex und benötigt einen geringeren Bauraum.

In einer weiteren bevorzugten Ausführungsform ist eine steuerbare Drossel oder alternativ ein mechanisch vorgesteuertes Ventil zwischen dem mindestens einen Einlassventil, insbesondere einlassventilausgangsseitig in der Arbeitsdruckleitung und dem Arbeitsdruckanschluss angeordnet. In einer alternativen bevorzugten Ausführungsform ist die steuerbare Drossel oder das mechanisch vorgesteuertes Ventil zwischen der Druckquelle und dem mindestens einen Einlassventil, insbesondere in einer Druckzuleitung angeordnet. Gemäß diesen beiden Ausführungsformen kann die steuerbare Drossel oder das mechanisch vorgesteuerte Schaltventil also entweder in der Ausgangsleitung, insbesondere der Arbeitsdruckleitung oder in der Eingangsleitung, insbesondere der Druckzuleitung angeordnet sein. Ist die steuerbare Drossel oder das mechanisch vorgesteuerte Ventil in der Eingangsleitung angeordnet, befindet es sich vorzugsweise vor dem mindestens einen Eingangsventil.

Das mechanisch vorgesteuerte (Schalt-) Ventil ist vorzugsweise als Sitzventil, insbesondere als 2/2-Wegevenit ausgeführt und kann zwischen einer, vorzugsweise vollständig offenen und einer, vorzugsweise vollständig geschlossenen Position hin und her geschaltet werden. In der geschlossenen Position sitzt vorzugsweise ein ventilspezifisch ausgebildeter Ventilkörper auf dem Ventilsitz auf und stellt besonders bevorzugt eine vollständige Abdichtung her. Obgleich eine derartige Ausgestaltung mit einem mechanisch vorgesteuerten Ventil technisch aufwendiger ist, kann sie von Vorteil sein, da bei derartigen Ventilen ein vollständiges Verschließen des Ventilsitzes ermöglicht ist, so dass eine Restleckage, wie sie bei der veränderbaren und/oder steuerbaren Drossel auftritt, vermeidbar ist. Das vollständige Verschließen hat beispielhaft den Vorteil, dass beispielsweise ein Kompressor eines Fahrzeugs, der Druckluft bereitstellt, nicht permanent weiterlaufen muss, sondern durch das Verschließen des Ventils abschaltbar ist.

Die steuerbare Drossel kann vorzugsweise zwischen einer vollständig geöffneten Stellung und einer vollständig geschlossenen Stellung, insbesondere stufenlos, verstellbar sein. In der geöffneten Stellung hat die steuerbare Drossel vorzugsweise einen derartigen Öffnungsquerschnitt, dass ein Durchlass durch die Drossel störungsfrei ermöglicht ist. Der Drosselquerschnitt ist dabei vorzugsweise so groß wie ein Querschnitt der Arbeitsdruckleitung, so dass in der geöffneten Stellung durch die Drossel keine Engstelle gebildet wird. In der geschlossenen Stellung ist die steuerbare Drossel vorzugsweise vollständig geschlossen, so dass ein Durchlass durch die Drossel nicht möglich ist. Durch das Vorsehen einer derartigen steuerbaren Drossel wird eine Ausfallwahrscheinlichkeit der Steuervorrichtung reduziert. Hierzu ist mit anderen Worten eine in ihrem Öffnungsquerschnitt veränderbare Drossel, d. h. keine Drossel mit einem fixen Drosselquerschnitt, zwischen der Arbeitsdruckleitung und dem Arbeitsdruckanschluss vorgesehen. Die veränderbare, d. h., regelbare, Drossel hat den Vorteil, während eines schnellen Entlüftungsvorgangs, bei dem sich das Schnellentlüftungsventil in der Durchlassstellung befindet, die Arbeitsdruckleitung zwischen dem mindestens einen Eingangsventil und dem Arbeitsdruckanschluss abzusperren. Verbleibt das mindestens eine Einlassventil in einem Störungsfall beispielsweise in einer aktiven, d. h. zumindest teilweise geöffneten, Schaltstellung, kann über die sodann geschlossene Drossel verhindert werden, dass die Druckluftquelle über das mindestens eine Einlassventil mit dem Arbeitsdruckanschluss verbunden bleibt. Es kann also beispielsweise verhindert werden, dass an einer Bremsanlage, die an dem Arbeitsdruckanschluss angeschlossen ist, ein ungewünschtes Bremsmoment bereitgestellt wird. Besonders vorteilhaft ist es, dass durch die steuerbare Drossel keine zusätzlichen Betätigungsaktoren oder zusätzliche Vorsteuerventile benötigt werden, so dass die bevorzugte Lösung der Erfindung besonders einfach und kostengünstig ausgeführt sein kann. Ferner ist die veränderbare, steuerbare Drossel robust in der Bedienung, so dass die gesamte Funktionssicherheit auf Vorrichtungsebene erhöht werden kann.

Eine derartig variable Drossel mit bevorzugt veränderbarem Öffnungsquerschnitt kann beispielsweise derart ausgebildet sein, dass beispielsweise in einem Drosselkörper eine Quer- oder Längsbohrung vorgesehen ist. In der Quer- oder Längsbohrung kann vorteilhafterweise ein verschiebbar gelagertes Kolbenelement angeordnet sein. Durch ein Einschieben des Kolbenelements in die Quer- oder Längsbohrung kann vorteilhafterweise ein Drosseleffekt erreicht, insbesondere der Drosseleffekt verstärkt werden. Durch ein Herausbewegen des Kolbenelements wird hingegen vorzugsweise der Drosseleffekt verringert. Eine derartige Ausgestaltung der Drossel mit veränderbarem Öffnungsquerschnitt hat den Vorteil, dass eine konstruktiv einfache und kostengünstige Herstellung möglich ist. Dieser Vorteil überwiegt selbst über den Nebeneffekt, dass aufgrund eines konstruktiv bedingten und für die Funktionsweise notwendigen Spiels zwischen der Bohrungswand und dem Kolbenelement stets ein, wenn auch nur marginaler Ringspalt geöffnet bleibt, durch den eine minimale Leckage erfolgt, die in dieser konstruktiven Ausführung der Drossel jedoch tolerierbar ist. Insbesondere kann diese Leckage vorzugsweise über die sonstigen Abführ- und/oder Ableitoptionen, insbesondere über mindestens ein Ausgangsventil und mindestens ein Schnellentlüftungsventil kompensiert werden. Beispielsweise kommt es bei einer fast vollständig geschlossenen Drossel dazu, dass kein Steuerdruck am Ausgang anliegt.

Besonders bevorzugt ist es, wenn die steuerbare Drossel mit Schnellentlüftungsventil mechanisch verbunden ist. Eine derartige mechanische Verbindung kann bspw. mittels einer Feder und/oder einem Hebelgestänge hergestellt sein, um bspw. eine Öffnungs- und/oder Schließbewegung der steuerbaren Drossel auf das Schnellentlüftungsventil zu übertragen. Besonders bevorzugt kommt als mechanische Verbindung zwischen Drossel und Schnellentlüftungsventil eine Zugstange zu Einsatz. Alternativ kann auch eine Druckstange als mechanische Verbindung eingesetzt werden. Weiterhin alternativ kann auch eine gekoppelte Rotation oder dergleichen als mechanische Verbindung zum Einsatz kommen. Bei der gekoppelten Rotation kann es sich vorzugsweise um eine magnetisch gekoppelte Rotation handeln. Mit einer magnetgekoppelten Rotationsverbindung können vorzugsweise reine Dreh- und Linearbewegung und/oder simultane Dreh/Linearbewegung realisiert werden. Die dabei übertragbaren Verschiebekräfte und Drehmomente sind dabei durch eine Anzahl von Magneten und deren Anordnung untereinander definiert.

In einer weiteren bevorzugten Ausführungsform umfasst das Schnellentlüftungsventil eine Nennweite in einem Bereich von 5 bis 15 mm, weiterhin bevorzugt eine Nennweite in einem Bereich von 7 bis 15 mm, besonders bevorzugt im Bereich von 7 bis 9 mm. Unter dem Begriff "Nennweite" wird beispielsweise auch ein Öffnungsquerschnitt des Schnellentlüftungsventils verstanden. In einer weiteren bevorzugten Ausführungsform umfasst das Schnellentlüftungsventil eine Nennweite, die mindestens einer zweifachen Nennweite des zumindest einen Einlassventils entspricht.

In einer weiteren bevorzugten Ausführungsform umfasst die pneumatische Steuervorrichtung zumindest zwei Einlassventile, die parallel zueinander geschaltet sind. Ferner ist es bevorzugt, wenn die pneumatische Steuervorrichtung zumindest zwei Auslassventile, die parallel zueinander geschaltet sind, umfasst. Hierdurch wird eine besonders feine Druckregelung des Arbeitsdruckes an dem Arbeitsdruckanschluss gewährleistet. Ferner können die Ventile in einer solchen Parallelschaltung mit einer kleineren Nennweite gegenüber einer einfachen, nicht parallel geschalteten Verschaltung ausgeführt sein, so dass kleinere Ventile zum Einsatz kommen können. Hierdurch wird weniger Bauraum benötigt und die Regelungsvorrichtung kann insgesamt kompakter ausgeführt sein. Aufgrund einer kleineren Nennweite der jeweiligen Ventile ist ebenfalls eine feinere Druckregelung möglich. Ebenfalls hat eine Parallelschaltung von Einlassventilen und/oder Auslassventilen den Vorteil, dass hierdurch eine Redundanz im Aufbau der Steuervorrichtung geschaffen wird, durch die die Ausfallwahrscheinlichkeit verringert wird. Wenn bspw. ein Einlassventil ausfällt, kann dessen Funktion zumindest teilweise über ein parallel geschaltetes, funktionsfähiges Einlassventil kompensiert werden. Somit kann bspw. eine Funktionsweise einer an dem Arbeitsdruckanschluss angeschlossenen Bremsanlage weiterhin ermöglicht werden.

In einer weiteren bevorzugten Ausführungsform der hydrodynamischen Bremse umfasst diese einen Retarder. Ein derartiger Retarder ist vorzugsweise in einer Dauerbremsanlage eines Kraftfahrzeuges, wie beispielsweise eines Omnibusses oder eines Lastkraftwagens, umfasst. Ein derartiger Retarder kann grundsätzlich als ein hydrodynamischer oder elektromagnetischer Retarder ausgeführt sein. Vorliegend ist der Retarder besonders bevorzugt als ein hydrodynamischer ausgeführt. Bei einem hydrodynamischen Retarder handelt es sich vorzugsweise um eine Strömungsbremse, die besonders bevorzugt als ein Sekundärretarder auf eine Kardanwelle eines Antriebsstrangs wirksam und entweder an einem Schaltgetriebe über einer dortigen Ausgangswelle oder an einem Achsgetriebe über einer dortigen Eingangswelle angeordnet ist. Vorzugsweise umfasst ein derartiger Retarder ein, beispielsweise torusförmiges, Gehäuse. Vorzugsweise sind in dem Gehäuse des Retarders ein drehbar gelagertes, an der Ausgangswelle des Schaltgetriebes, der Kardanwelle oder der Eingangswelle des Achsgetriebes befestigtes Rotor-Schaufelrad und ein feststehendes, an dem Gehäuse des Retarders befestigtes Stator-Schaufelrad angeordnet. Ist das Gehäuse des Retarders während der Fahrt des Fahrzeuges nun zumindest teilweise mit einem Arbeitsfluid, wie Hydrauliköl, gefüllt, wird das Arbeitsfluid durch das drehende Rotor-Schaufelrad nach außen befördert und strömt in das Stator-Schaufelrad. In dem Stator-Schaufelrad wird das Arbeitsfluid umgelenkt und in ein Inneres des Gehäuses zurückbefördert. Bei dieser Fluidbewegung wird Bewegungsenergie in Wärmeenergie umgewandelt. Durch diese Energieumwandlung wird das Fahrzeug im Ergebnis abgebremst.

Durch die erfindungsgemäße pneumatische Steuervorrichtung wird abhängig von der Bremsanforderung eines Fahrzeuges eine Bremsleistung durch eine Beaufschlagung eines mit dem Arbeitsfluid des Retarders gefüllten Vorratsbehälters mit Druckluft gesteuert bzw. geregelt.

Wird der über den Arbeitsdruckanschluss in den Vorratsbehälter eingeleitete Luftdruck erhöht, wird eine Menge an Arbeitsfluid, das in das Gehäuse des Retarders gedrückt wird, erhöht. Hierdurch wird auch das in dem Retarder erzeugte Bremsmoment erhöht. Wenn der in dem Vorratsbehälter wirksame Luftdruck dagegen über den Arbeitsdruckanschluss abgesenkt wird, wird Arbeitsfluid aus dem Gehäuse des Retarders aufgrund des dort nunmehr herrschenden Überdrucks zurück in den Vorratsbehälter gedrückt. Dadurch kann das in dem Retarder erzeugte Bremsmoment wirksam verringert werden.

Es wird davon ausgegangen, dass die Definitionen und Ausführungen der oben genannten Begriffe für alle in dieser Beschreibung und im Folgenden beschriebenen Aspekte gelten, sofern nichts anderes angegeben ist. Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich allein oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Nachfolgend werden Details und Ausführungsformen der Erfindung anhand von lediglich schematischen Zeichnungen erläutert.

Es zeigen:
- Fig. 1:: ein pneumatischer Schaltplan einer Steuervorrichtung gemäß einer ersten bevorzugten Ausführungsform;
- Fig. 2: ein pneumatischer Schaltplan einer Steuervorrichtung gemäß einer zweiten bevorzugten Ausführungsform;
- Fig. 3: ein pneumatischer Schaltplan einer Steuervorrichtung gemäß einer dritten bevorzugten Ausführungsform;
- Fig. 4: ein pneumatischer Schaltplan einer Steuervorrichtung gemäß einer vierten bevorzugten Ausführungsform;
- Fig. 5: ein pneumatischer Schaltplan einer Steuervorrichtung gemäß einer fünften bevorzugten Ausführungsform.

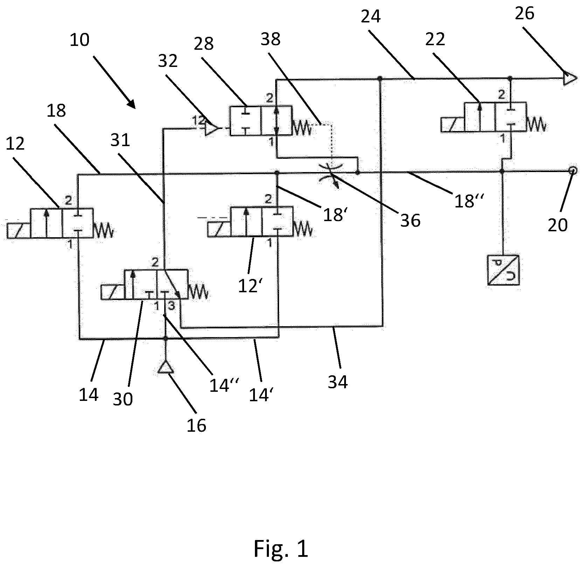

Fig. 1 zeigt eine pneumatische Steuervorrichtung 10 für eine hydrodynamische Bremse (nicht näher dargestellt) gemäß einem Ausführungsbeispiel der Erfindung.

Die pneumatische Steuervorrichtung 10 umfasst gemäß Fig. 1 zwei Einlassventile 12, 12' (also mithin zumindest ein Einlassventil 12, 12'), die zueinander parallelgeschaltet sind. Die Einlassventile 12, 12' sind vorliegend als direkt gesteuerte 2/2-Wege-Magentventile ausgeführt. Grundsätzlich können die Einlassventile 12, 12' auch als pneumatisch vorgesteuerte 2/2-Wegeventile ausgeführt sein. Die Einlassventile 12,12' sind in einem unbestromten Zustand geschlossen, so dass kein Durchfluss durch das jeweilige Ventil ermöglicht wird. Die Einlassventile 12, 12' sind in einem bestromten Zustand geöffnet, so dass ein Durchfluss eines Arbeitsfluides durch das jeweilige Ventil ermöglicht wird. **In** Figur 1 sind die Einlassventil 12, 12' jeweils in einer geschlossenen Stellung gezeigt.

Die beiden Einlassventile 12, 12' weisen jeweils zwei Ventileingänge sowie zwei Ventilausgänge auf. Jeweils einer der Ventileingänge sowie jeweils einer der Ventilausgänge ist verplombt und stellt somit eine Durchflusssperre dar. In dem jeweils bestromten Zustand der Einlassventile 12 ist jeweils ein nicht gesperrter Ventileingang über eine Belüftungsleitung 14, 14' mit einer Druckluftquelle 16 verbunden. In dieser geöffneten Ventilstellung ist ferner ein jeweils nicht gesperrter Ventilausgang mit einer jeweiligen Arbeitsdruckleitung 18, 18' verbunden. Die Arbeitsdruckleitungen 18, 18' weisen einen gemeinsamen Knotenpunkt auf, an dem sich die beiden Arbeitsdruckleitungen 18, 18' zu einer einzigen Arbeitsdruckleitung 18" verbinden. Die Arbeitsdruckleitung 18" führt zu einem Arbeitsdruckanschluss 20. An dem Arbeitsdruckanschluss 20 ist eine hydrodynamische Bremse, bspw. ein Retarder, anschließbar. Über den Arbeitsdruckanschluss 20 kann ein Eingangsdruck der hydrodynamischen Bremse mittels der Steuervorrichtung 10 geregelt werden.

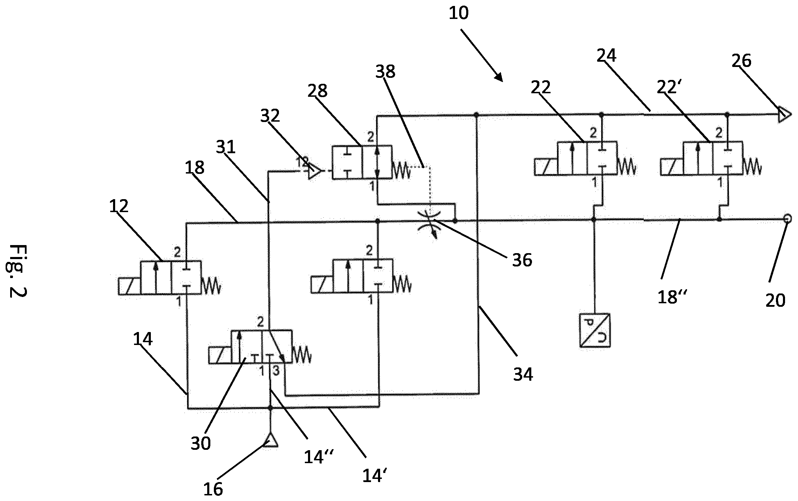

Ferner weist die Steuervorrichtung 10 im Falle der Figur 1 zumindest ein Auslassventil 22 auf. In einem weiteren Ausführungsbeispiel nach Figur 2 kann die Steuervorrichtung 10 auch zwei oder mehr Auslassventile 22, 22' aufweisen, die zueinander parallelgeschaltet sind. Die Auslassventile 22, 22' sind vorliegend als direkt gesteuerte 2/2-Wege-Magentventile ausgeführt. Grundsätzlich können die Auslassventile 22, 22' auch als pneumatisch vorgesteuerte 2/2-Wegeventile ausgeführt sein. Die Auslassventile 22, 22' sind in einem unbestromten Zustand geschlossen, so dass kein Durchfluss durch das jeweilige Ventil ermöglicht wird. Die Auslassventile 22, 22' sind in einem bestromten Zustand geöffnet, so dass ein Durchfluss eines Arbeitsfluides durch das jeweilige Ventil ermöglicht wird. In Figur 1 ist das zumindest eine Auslassventil 22, 22' in einer geschlossenen Stellung gezeigt. Über das zumindest eine Auslassventil 22, 22' ist es möglich, die Arbeitsdruckleitung 18" mit einer Entlüftungsleitung 24 fluidisch zu verbinden. Die Entlüftungsleitung 24 führt zu einem Entlüftungsausgang 26. Über den Entlüftungsausgang 26 ist eine vollständige Entlüftung der Steuervorrichtung 10 ermöglicht, um bspw. den Arbeitsdruckanschluss 20 in einen drucklosen Zustand zu bringen.

Zu einer möglichst schnellen Entlüftung der Arbeitsdruckleitungen 18, 18', 18" sowie des Arbeitsdruckanschlusses 20 weist die Steuervorrichtung 10 zumindest ein Schnellentlüftungsventil 28 auf. Die Arbeitsdruckleitung 18" ist vorliegend über das Schnellentlüftungsventil 28 mit der Entlüftungsleitung 24 verbunden. Zwischen der Druckluftquelle 16 und dem Schnellentlüftungsventil 28 ist erfindungsgemäß ein Sicherheitsventil 30 angeordnet. Das Sicherheitsventil ist eingangsseitig über eine Belüftungsleitung 14" mit der Druckquelle 16 verbunden. Ausgangsseitig ist das Sicherheitsventil 30 über eine Vorsteuerdruckleitung 31 mit einem Vorsteuerventileinlass 32 des Schnellentlüftungsventils 28 verbunden. Das Sicherheitsventil 30 ist vorliegend als 3/2-Wege-Magentvenil ausgeführt. Mittels des Sicherheitsventils 30 wird das Schnellentlüftungsventil 28 pneumatisch vorgesteuert. Hierfür kann an dem Vorsteuerventileinlass 32 des Schnellentlüftungsventils 28 bspw. ein Vorsteuerdruck über ein Schießen des Sicherheitsventils 30 (in Figur 1 ist das Sicherheitsventil 30 in einer geöffneten Stellung gezeigt) aufgebaut werden, durch den das Schnellentlüftungsventil 28 von einem geöffneten, d. h., entlüftenden, Zustand (siehe Figur 1) in einen geschlossenen Zustand gebracht wird. Das Sicherheitsventil 30 ist in dem gezeigten, geöffneten Zustand an einem Ventilausgang über einen Sicherheitsentlüftungskanal 34 mit dem Entlüftungskanal 24 verbunden, so dass sich in dem geöffneten Zustand des Sicherheitsventils 30 kein Druck in der Vorsteuerdruckleitung 31 aufbauen kann. Dadurch kann ein ungewünschter Druckaufbau in der Vorsteuerdruckleitung 31 verhindert werden.

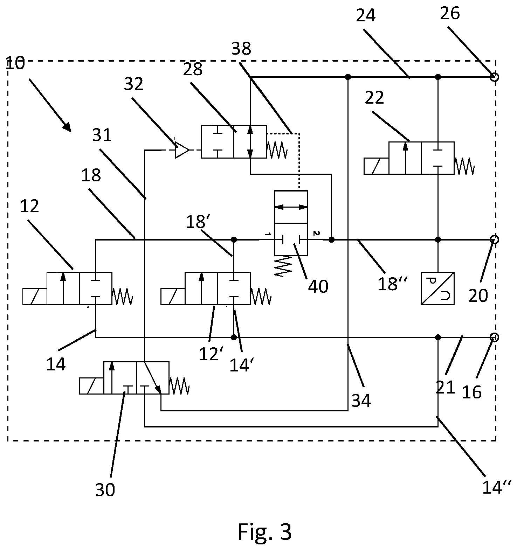

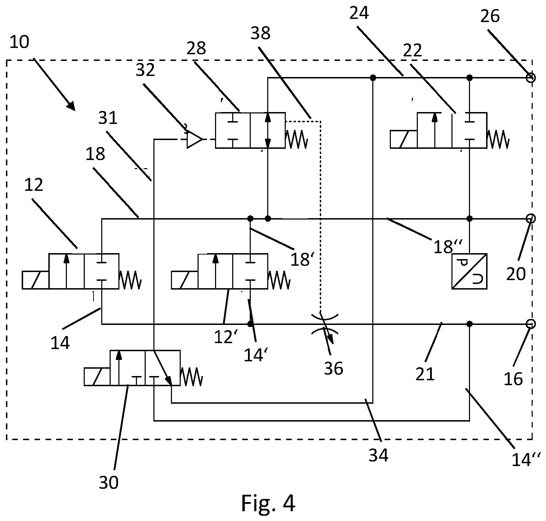

Die Steuervorrichtung 10 weist ferner eine steuerbare Drossel 36 (siehe Fig. 3) oder ein mechanische vorgesteuertes Ventil 40, insbesondere ein Sitzventil auf (siehe Fig. 4). Die steuerbare Drossel 36 oder das Ventil 40 ist nach dem Knotenpunkt der Arbeitsdruckleitung 18" und vor dem Arbeitsdruckanschluss 20 angeordnet. Die steuerbare Drossel 36 oder das mechanisch vorgesteuerte Ventil 40 ist mechanisch mit dem Schnellentlüftungsventil 28 verbunden. Eine derartige mechanische Verbindung 38 ist schematische über eine gestrichelte Linie angezeigt.

Figur 2 unterscheidet sich von Figur 1 lediglich dadurch, dass zwei parallel zueinander geschaltete Auslassventile 22, 22' vorgesehen sind.

In den Ausführungsbeispielen der Fig. 3 bis 5 kann die Druckluftquelle 16 auch über eine Druckzuleitung 21, die auch als Eingangsleitung P bezeichnet wird mit restlichen, pneumatischen Steuervorrichtung 10 verbunden sein. Dies stellt aber im Gegensatz zu den Fig. 1 und 2 nur ein geänderte Darstellung und keine funktionelle oder technische Änderung dar. Aufgrund der im Verhältnis zu Fig. 1 andersartig dargestellten Druckquelle 16 und der Druckzuleitung 21 verlaufen die Belüftungsleitung 14, 14', 14" ebenfalls andersartig, obgleich die Wirkweise der anders dargestellten Komponenten und Anordnungen in pneumatischer Hinsicht ansonsten gleichartig ist.

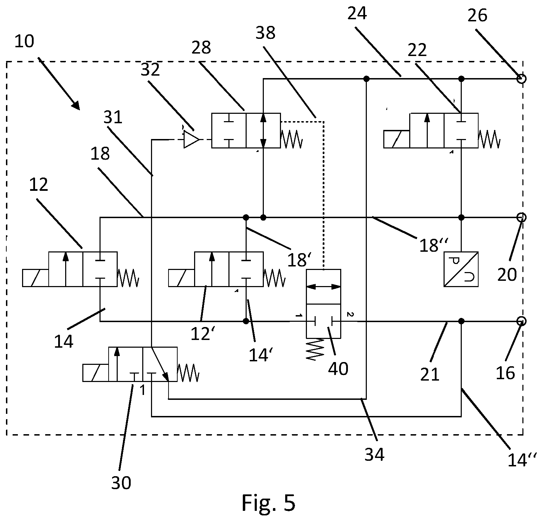

In alternativen Ausführungsbeispielen kann die steuerbare Drossel (siehe Fig. 4) oder das mechanisch vorgesteuertes Ventil (siehe Fig. 5) auch zwischen der Druckquelle 16 und dem mindestens einen Einlassventil 12, 12', insbesondere in der Druckzuleitung 21 angeordnet sein.

### Bezugszeichenliste:

- 10: Pneumatische Steuervorrichtung
- 12, 12': Einlassventil
- 14, 14', 14": Belüftungsleitung
- 16: Druckluftquelle
- 18, 18', 18": Arbeitsdruckleitung
- 20: Arbeitsdruckanschluss
- 21: Druckzuleitung
- 22, 22': Auslassventil
- 24: Entlüftungsleitung
- 26: Entlüftungsausgang
- 28: Schnellentlüftungsventil
- 30: Sicherheitsventil
- 31: Vorsteuerdruckleitung
- 32: Vorsteuerventileinlass
- 34: Sicherheitsentlüftungskanal
- 36: steuerbare Drossel
- 38: mechanische Verbindung
- 40: mechanisch vorgesteuertes Ventil

## Patentansprüche

1. Pneumatische Steuervorrichtung für eine hydrodynamische Bremse, mit einem Arbeitsdruckanschluss (20), mindestens einem Einlassventil (12, 12'), über das eine zu dem Arbeitsdruckanschluss (20) führende Arbeitsdruckleitung (18, 18', 18") mit einer an eine Druckluftquelle (16) angeschlossenen Belüftungsleitung (14, 14', 14") verbindbar ist, und mindestens einem Auslassventil (22, 22'), über das die Arbeitsdruckleitung (18, 18', 18") mit einer an einen Entlüftungsausgang (26) angeschlossenen Entlüftungsleitung (24) verbunden ist, wobei die Arbeitsdruckleitung (18, 18', 18") über zumindest ein Schnellentlüftungsventil (28) mit der Entlüftungsleitung (24) verbunden ist, **dadurch gekennzeichnet, dass** zwischen der Druckluftquelle (16) und dem Schnellentlüftungsventil (28) ein Sicherheitsventil (30) angeordnet und dazu eingerichtet ist, das Schnellentlüftungsventil (28) anzusteuern.

2. Pneumatische Steuervorrichtung nach Anspruch 1, **dadurch gekennzeichnet, dass** das Sicherheitsventil (30) als ein 3/2-Wegeventil, insbesondere als ein 3/2-Wege-Magnetschaltventil, ausgeführt ist.

3. Pneumatische Steuervorrichtung nach einem der vorstehenden Ansprüche, **dadurch gekennzeichnet, dass** eine steuerbare Drossel (36) oder ein mechanisch vorgesteuertes Ventil (40) zwischen dem mindestens einen Einlassventil (12, 12') und dem Arbeitsdruckanschluss (20) angeordnet ist.

4. Pneumatische Steuervorrichtung nach Anspruch 1 oder 2, **dadurch gekennzeichnet, dass** eine steuerbare Drossel (36) oder ein mechanisch vorgesteuertes Ventil (40) zwischen der Druckquelle (16) und dem mindestens einen Einlassventil (12, 12'), insbesondere in einer Druckzuleitung (21) angeordnet ist.

5. Pneumatische Steuervorrichtung nach Anspruch 3 oder 4, **dadurch gekennzeichnet, dass** die steuerbare Drossel (36) mit dem Schnellentlüftungsventil (28) mechanisch verbunden ist.

6. Pneumatische Steuervorrichtung nach einem der Ansprüche 1 bis 5, **dadurch gekennzeichnet, dass** das Schnellentlüftungsventil (28) pneumatisch vorgesteuert ist.

7. Pneumatische Steuervorrichtung nach einem der Ansprüche 1 bis 6, **dadurch gekennzeichnet, dass** das Schnellentlüftungsventil (28) eine Nennweite in einem Bereich von 5 mm bis 15 mm, vorzugsweise in einem Bereich von 7 mm bis 9 mm, umfasst.

8. Pneumatische Steuervorrichtung nach einem der Ansprüche 1 bis 7, **dadurch gekennzeichnet, dass** die pneumatische Steuervorrichtung (10) zumindest zwei Einlassventile (12, 12') umfasst, die parallel zueinander geschaltet sind.

9. Pneumatische Steuervorrichtung nach einem der Ansprüche 1 bis 8, **dadurch gekennzeichnet, dass** die pneumatische Steuervorrichtung (10) zumindest zwei Auslassventile (22, 22') umfasst, die parallel zueinander geschaltet sind.

10. Hydrodynamische Bremse mit einer pneumatischen Steuervorrichtung (10) nach einem der Ansprüche 1 bis 9.

11. Hydrodynamische Bremse nach Anspruch 10, **dadurch gekennzeichnet, dass** die hydrodynamische Bremse einen Retarder umfasst.

## Claims

1. A pneumatic controlling device for a hydrodynamic brake, with a working pressure port (20), at least one inlet valve (12, 12') via which a working pressure line (18, 18', 18") leading to the working pressure port (20) can be connected to an air feed line (14, 14', 14") that is connected to a compressed-air source (16), and at least one outlet valve (22, 22') via which the working pressure line (18, 18', 18") is connected to an air bleed line (24) that is connected to an air bleed exit (26), wherein the working pressure line (18, 18', 18") is connected to the air bleed line (24) via at least one quick air bleed valve (28), **characterized in that** a safety valve (30) is arranged between the compressed-air source (16) and the quick air bleed valve (28) and is configured to activate the quick air bleed valve (28).

2. The pneumatic controlling device according to claim 1, **characterized in that** the safety valve (30) is configured as a 3/2-way valve, in particular as a 3/2-way solenoid switch valve.

3. The pneumatic controlling device according to any one of the preceding claims, **characterized in that** a controllable throttle (36) or a mechanically pilot-controlled valve (40) is arranged between the at least one inlet valve (12, 12') and the working pressure port (20).

4. The pneumatic controlling device according to claim 1 or 2, **characterized in that** a controllable throttle (36) or a mechanically pilot-controlled valve (40) is arranged between the pressure source (16) and the at least one inlet valve (12, 12'), in particular in a pressure feed line (21).

5. The pneumatic controlling device according to claim 3 or 4, **characterized in that** the controllable throttle (36) is mechanically connected to the quick air bleed valve (28).

6. The pneumatic controlling device according to any one of claims 1 to 5, **characterized in that** the quick air bleed valve (28) is pneumatically pilot-controlled.

7. The pneumatic controlling device according to any one of claims 1 to 6, **characterized in that** the quick air bleed valve (28) has a nominal width in a range from 5 mm to 15 mm, preferably in a range from 7 mm to 9 mm.

8. The pneumatic controlling device according to any one of claims 1 to 7, **characterized in that** the pneumatic controlling device (10) comprises at least two inlet valves (12, 12'), which are connected in parallel to one another.

9. The pneumatic controlling device according to any one of claims 1 to 8, **characterized in that** the pneumatic controlling device (10) comprises at least two outlet valves (22, 22'), which are connected in parallel to one another.

10. A hydrodynamic brake with a pneumatic controlling device (10) according to any one of claims 1 to 9.

11. The hydrodynamic brake according to claim 10, **characterized in that** the hydrodynamic brake comprises a retarder.

## Revendications

1. Dispositif de commande pneumatique pour un frein hydrodynamique, comprenant un raccord de pression de travail (20), au moins une soupape d'admission (12, 12') par le biais de laquelle une conduite de pression de travail (18, 18', 18") menant au raccord de pression de travail (20) peut être raccordée à une conduite d'alimentation d'air (14, 14', 14") raccordée à une source d'air comprimé (16), et au moins une soupape de sortie (22, 22') par le biais de laquelle la conduite de pression de travail (18, 18', 18") est raccordée à une conduite de purge d'air (24) raccordée à une sortie de purge d'air (26), la conduite de pression de travail (18, 18', 18") étant raccordée à la conduite de purge (24) par le biais d'au moins une soupape de purge d'air rapide (28), **caractérisée en ce qu'**une soupape de sécurité (30) est disposée entre la source d'air comprimé (16) et la soupape de purge d'air rapide (28) et est prévue pour activer la soupape de purge d'air rapide (28).

2. Dispositif de commande pneumatique selon la revendication 1, **caractérisée en ce que** la soupape de sécurité (30) est réalisée sous forme de soupape à 3/2 voies, en particulier sous forme d'électrovanne à 3/2 voies.

3. Dispositif de commande pneumatique selon l'une quelconque des revendications précédentes, **caractérisée en ce qu'**un étranglement commandable (36) ou une soupape pilotée mécaniquement (40) est disposé entre l'au moins une soupape d'admission (12, 12') et le raccord de pression de travail (20).

4. Dispositif de commande pneumatique selon la revendication 1 ou 2, **caractérisée en ce qu'**un étranglement commandable (36) ou une soupape pilotée mécaniquement (40) est disposé entre la source de pression (16) et l'au moins une soupape d'admission (12, 12'), en particulier dans une conduite d'alimentation en pression (21).

5. Dispositif de commande pneumatique selon la revendication 3 ou 4, **caractérisée en ce que** l'étranglement commandable (36) est raccordé mécaniquement à la soupape de purge d'air rapide (28).

6. Dispositif de commande pneumatique selon l'une quelconque des revendications 1 à 5, **caractérisée en ce que** la soupape de purge d'air rapide (28) est pilotée pneumatiquement.

7. Dispositif de commande pneumatique selon l'une quelconque des revendications 1 à 6, **caractérisée en ce que** la soupape de purge d'air rapide (28) présente une largeur nominale dans une plage de 5 mm à 15 mm, de préférence dans une plage de 7 mm à 9 mm.

8. Dispositif de commande pneumatique selon l'une quelconque des revendications 1 à 7, **caractérisée en ce que** le dispositif de commande pneumatique (10) comprend au moins deux soupapes d'admission (12, 12') raccordées en parallèle l'une à l'autre.

9. Dispositif de commande pneumatique selon l'une quelconque des revendications 1 à 8, **caractérisée en ce que** le dispositif de commande pneumatique (10) comprend au moins deux soupapes de sortie (22, 22') raccordées en parallèle l'une à l'autre.

10. Frein hydrodynamique comprenant un dispositif de commande pneumatique (10) selon l'une quelconque des revendications 1 à 9.

11. Frein hydrodynamique selon la revendication 10, **caractérisé en ce que** le frein hydrodynamique comprend un ralentisseur.
